# EUROPEAN PATENT APPLICATION

(11) **EP 2 453 351 A1**
(43) Date of publication of application: **16.05.2012**
(21) Application number: 10014582.0
(22) Date of filing: 13.11.2010
(51) Int. Cl.: G06F 9/445

(54) **Method of multiple boot manager**

(71) Applicant: Giga-Byte Technology Co., Ltd., Taipei 231 (TW)
(72) Inventor: Ma, Mou-Ming, Hsin-Tien Taipei Hsien 231 (TW); Chao, Ching-Hung, Hsin-Tien Taipei Hsien 231 (TW); Tseng, Po-Chang, Hsin-Tien Taipei Hsien 231 (TW)
(74) Representative: Schwerbrock, Florian

(57) **Abstract**

The present invention provides a method of multiple boot manager in a computer equipped with BIOS and a storing medium. The storing medium is defined with a partition for multiple boot manager, a first partition and a second partition, wherein the partition for multiple boot manager contained with a multiple boot manager and address flags. Firstly, starting up a computer is executed for loading a first operating system located on the first partition. Then altering operating system is executed which includes: executing an application program and creating a conversational option interface for choice by the user, altering the address flag to direct the second partition. Finally, rebooting a computer is executed which includes: unloading the first OS; loading the partition for multiple boot manager, directing to the second partition according to the address flag of the partition for multiple boot manager and multiple boot manager loading the second partition; loading the second OS located on the second partition.

## Description

### BACKGROUND OF THE INVENTION

### Field of the invention

The present invention relates to a method of multiple boot manager, and more particularly to a method to define partitions for multiple boot manager on hard disk.

### Description of the Prior Art

As for computer configured with X86 Central Processing Unit (CPU), normal boot procedure is to power on computer till an operating system (OS) is loaded,

The first process to be performed on the computer system compatible with IBM PC is Basic Input / Output System (BIOS) after the computer is switched on. In fact, BIOS is stored ln Rctd.0fily' Memory (R4M) on motherboard or Flash Memory, which acts as service program for the basic operation of computer system. Generally, software stored in hardware is to be called firmware. Firmware benefits to update or recovery the service program stored in memories via proper utility program;

Firstly, the BIOS perform Power On Self Test (POST) to ensure the peripheries connected with the computer in normal operation. Subsequently, BIOS performs an instruction searching for boot sector trying to read the boot sector on software and loading the operating system located in software. In the event there is no operating system located in software, BIOS read the first sector on hard disk known as master boot record (MBR) to load the operating system located in hard disk.

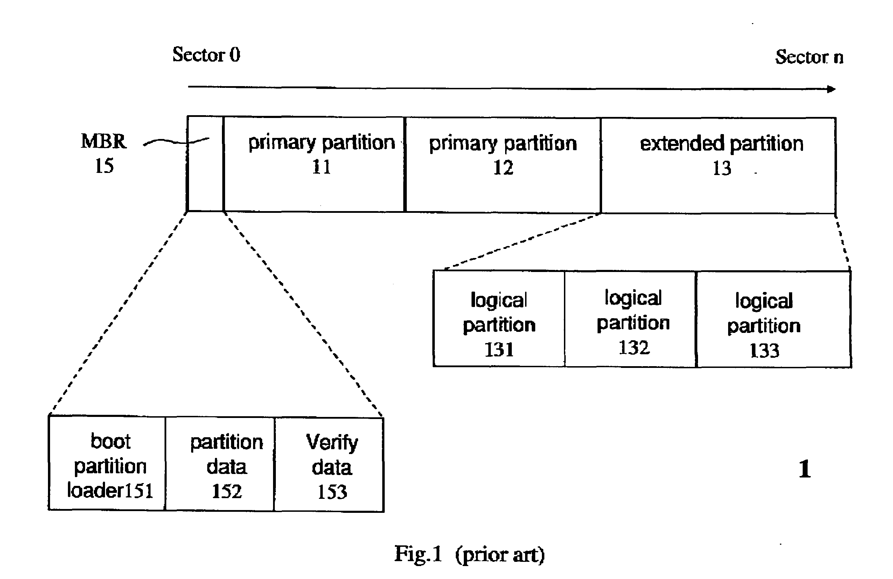

Fig.1 shows a conventional hard disk partitions, which is illustration and not limited. In fact there are a variety of definition modes of partitions on hard disk. As shown in Fig.1, the first sector on hard disk is known as master boot record (MBR) 15, addressed at cylinder 0, head 0, sector 1. The hard disk can be divided into plural partitions for loading a variety of operating system, The partition can be divided into primary partition 11, 12 and extended , partition 13. The primary partition is defined at most four so far, If there is an extended partition existed on hard disk, the primary partition is defined three at most. Although the extended partition is just one, it can be defined to be some logical partition 131-133. '

The data stored in MBR 15 can be divided into three parts. One is boot partition loader (BPL) or pic-loader, pre-boot 151, for loading boot sector to memories. The second is partition data 152 for storing data of partitions on hard disk, contained with a partition table for recording conditions of the hard disk partition, such as startup address and volumn of each partition. The third is verify data 153 for verifying whether the whole sector data of MBR is correct.

For the example of booting up the computers, firstly, when a computer is switched on, the BIOS program is executed and BIOS is loaded into memories. Then, power on self test (POST) is executed for testing hardware on computers such as CPU, motherboard, memories etc. The testing result is output and displayed on the screen or duplicator. By means of POST, the hardware and peripheries is tested to be in normal operation in subsequent booting procedure. If there is BIOS stored in other hardware devices, such as video graphics tan (VGA), integrated device electronics (IDE), or serial advance technology attachment (data), BIOS program is executed at the same time.

BIOS perform an instruction of seeking boot sector for starting up computers and load the boot sector for starting up computers into memories. As for hard disk, MAR located at the first sector on hard disk is read and loaded into memories. The control of program execution i_{D} passed to boot partition loader of master boot record (MBR) which loads the partitions setup with boot flag into memories. The control of program execution is passed to boot sector of partitions with boot flag. The boot sector is contained with a boot loader by which loading the operating system of partitions with boot flag into memories for execution via the guiding assist. And the control of program execution is passed to the operating system thus a booting procedure is fulfilled.

Although the hard disk can be divided into a plurality of partitions with a variety of operating system loaded in, there is only but partitions with booting flag loaded into memories for execution. As a result, the normal booting procedure is linear and mutually exclusive, that is, only the partitions with booting flag and OS placed thereof can be loaded directly, to the contrary, those partitions without booting flag and OS placed thereof cannot be executed,

For the purpose of multiple booting computers, software like multiple boot manager is developed so that different OS placed on a variety of partitions can be managed and be optional loaded into memories for execution. The conventional multiple boot manager is like that, such as SPFdislc, GRUB, LILO etc.

As MBR is the first sector loaded into memories for execution after BIOS is performed, most multiple boot manager is to modify or rebuild MBR which multiple boot manager installed thereon. Thus the control of program execution is obtained by MBR before OS is loaded An option of booting computers is provided for the user to choose a partition or an operating system for booting computer.

However, there appears a security concern when MBR is modified or rebuilt improperly, For example, the sector is easily subject to booting virus infection or breakdown so as to abnormal booting procedure. Additionally, most multiple boot manager is out of action and cannot be executed again due to the control of program execution turned over. When changing into another 09, the computer has to be restated and Will a whole boot procedure again. _{B}uch as cold or hot boot. In other words, the boot procedure has to be executed after BIOS is loaded, Only when multiple boot manager obtains the control of program exception, different OS can be optionally loaded in memories,

### Summary of the Invention

The present invention aims to provide a method of multiple boot manager in a computer equipped with BIOS and a storing medium. The storing medium is defined with a partition for multiple boot manager, a first partition and a second partition, wherein the partition for multiple boot manager is contained with a multiple boot manager, and address flags directing the first partition or the second partition.

The method of multiple boot manager includes three steps: starting up a computer system, altering operating system, rebooting a computer system.

The first step of starting up the computer includes steps as below: executing BIOS program; BIOS loading master boot record (MBR) to memories; directing the first partition according to the pre-boot partition indicated by address flag, MBR loading the partition for multiple boot manager to memories, and passing the control of program execution to the partition for multiple boot manager; the partition for multiple boot manager contained with a multiple boot manager to be loaded to the first partition for execution, passing the control of program execution to the first partition; the first partition contained with a boot sector which has a boot loader for loading the first operating system of the first partition to memories, and passing the control of program execution to the first OS, thus the booting procedure fulfilled.

The step of alteration OS includes the following steps: execution an application program under the condition of the first OS, and creating a conversational option interface for choosing by the user; altering the address flag of the partition for multiple boot manager to directing the second partition according to the choice or operation of the user,

Finally, the step of rebooting computer includes: unloading the fiw1 OS; loading the master boot record (MBR); loading multiple boot manager located in the partition for multiple boot manager; directing the second partition according to the address flag of the partition for multiple boot manager and loading multiple boot manager to the second partition; loading the second OS located on the second partition. The step of loading the master boot record (MBR) optionally can be omitted.

### BRIEF DESCRIPTION OF THE DRAWINGS

FIG. 1 shows a conventional hard disk partitions,;
FIJI. 2 shows the partitions of hard disk according to the present invention;
FIST. 3 is a flow chart illustrating the method of multiple boot manager;
FICI. 4 is a flow chart illustrating another embodiment of the method of multiple boot manager,

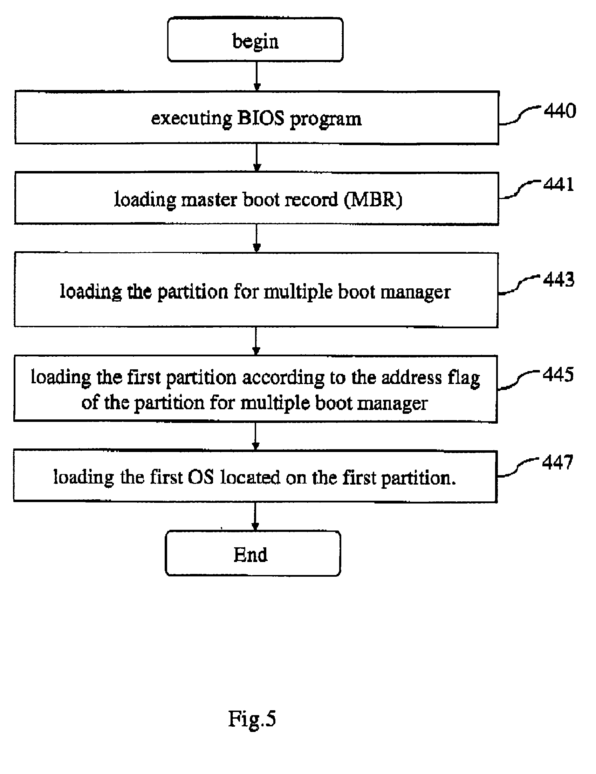

FIG. 5 and FIG.6 is the flowchart of starting up a computer according to the present invention;
FIG.7 shows the flowchart of rebooting procedure according to the present invention;
Fig.8 shows a flowchart of another embodiment about rebooting procedure according to the present invention,

### DETAILED DESCRIPTION OF THE INVENTION

The present invention provides a method of multiple boot manager capable of applying to computers like desktop or notebook computers configured with multiple boot modes. The method of multiple boot according to the present invention intends to load multiple optional operating system for choice at the time of switch on/off the computer for the purpose of loading the selected operating system to memories.

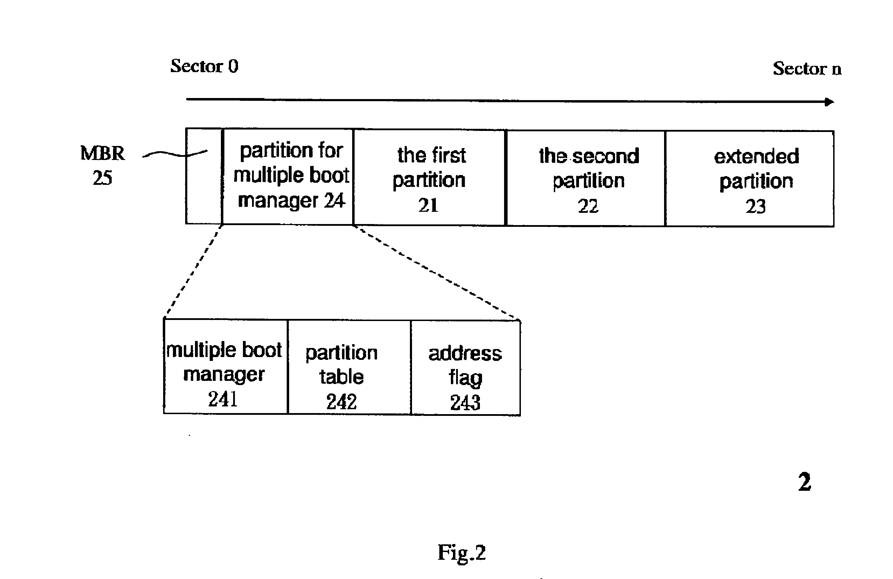

Fig.2 shows the partitions of hard disk according to the present invention, which is just illustration and not limited, actually there are a variety of definition modes of partitions on hard disk. The computer is equipped with a storing medium 2, preferred is hard disk. The storing medium 2 includes a master boot record (MBR) 25 located at the first sector where the address is cylinder 0, head 0, sector 1. The storing medium 2 includes a plurality of partitions 21-24, like a partition for multiple boot manager 24 and a plurality of primary partitions 21-22, at least a first partition 21 and a second partition 22. The primary partitions is used to load different operating system, with a first OS loaded in the first partition 21 and a second OS loaded in the second partition 22. The different OS according to The present invention includes windows operation system of different versions, such as Windows XP, Windows VISTA, Windows 7, or other than windows operation system, such as UNIX, Li₁₁.ux, FreeBSD, Solaris, or MAC OSX.

The partition for multiple boot manager 24 according to the present invention is an independent partition of storing medium 2, which is the designated partition for MBR 25 loaded in memories. The partition for multiple boot manager 24 includes a multiple boot manager 241 which is a program for controlling booting up a computer, a partition table 242 for recording address and volumn of each partition and an address flag 243 for designating one partition between the first partition 21 and the second partition 22 to be loaded in memories.

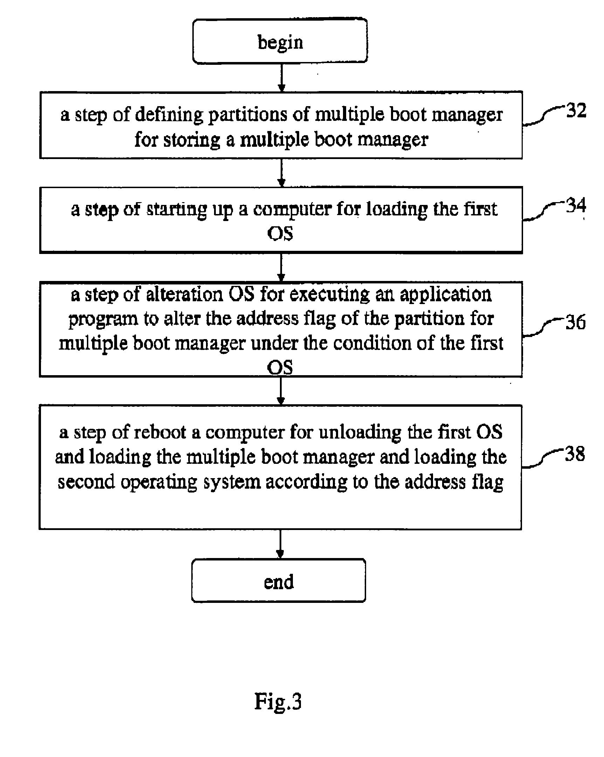

Fig.3 is a flow chart illustrating the method of multiple boot manager. The method described in the embodiment includes: defining a partition of multiple boot manager (step 32) with a multiple boot manager stored therein; starting up a computer (step 34) for loading the fust OS; alteration OS (step 36) for executing an application program to alter the address flag of the partition for multiple boot manager under the condition of the first OS; rebooting a computer (step 38) for unloading the first OS and loading the multiple boot manager and loading the second operating system according to the address flag,

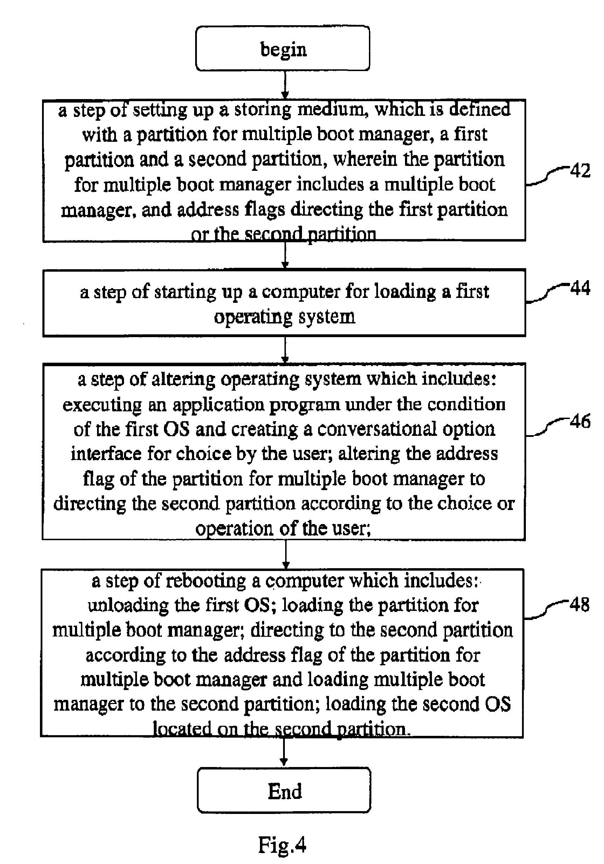

Fig.4 is a flow chart illustrating another embodiment of the method of multiple boot manager. )Firstly, setting up a storing medium (step 42) is executed. The storing medium is defined with a partition for multiple boot manager, a first partition and a second partition, wherein the partition for multiple boot manager includes multiple boot manager, and address flags directing the first partition or the second partition.

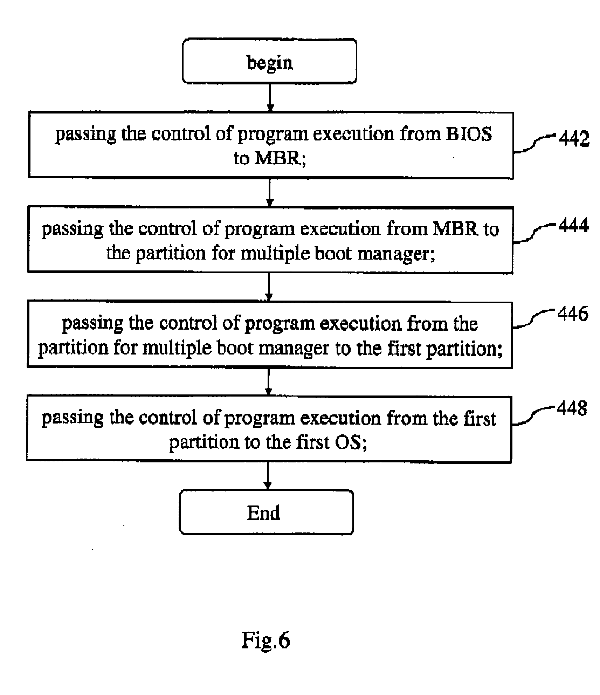

Here, the flow of booting up a computer according to the present invention will be described with reference to Fig.S and Fig.6. The step of executing starting up the computer (step 44) includes steps as below. BIOS program is executed (step 440) in response to signal of starting up or power-on computers to obtain the control of program execution. BIOS performs Power On Self Test (POST) to ensure the peripheries connected with the computer in normal operation. Subsequently, BIOS search for a boot sector for the purpose of loading master boot record (MBR) located on hard disk addressed at cylinder 0, head 0, sector 1 to memories (₈ttp 441). BIOS pass the control of program execution to master boot record (MBR) (step 442). MBR loads the partition for multiple boot manager to memories (step 443) and passes the control of program execution to the partition for multiple boot manager (step 444). The partition for multiple boot manager includes a multiple boot manager and address flags. The multiple boot manager loads the first partition to memories (step 445) according to the address flag directing to the first partition and the partition for multiple boot manager passes the control of program execution to the first partition (step 446).The first partition includes a boot sector which has a boot loader for loading the first OS located on the first partition,to memories (step 447).The first partition pass the control of program execution to the first OS located on the first partition (step 448).

Next, the step of alteration operating system is executed which include the following steps: executing an application program under the condition of the first OS, and creating a conversational option interface which includes a plurality of name options of different operating system for choosing by the user, the preferred interface is designed as radio button options, wherein the name option of the first OS is disabled or unaccessible, or the name option of the first OS is unable to display. The application program alters the address flag of the partition for multiple boot manager according to the choice of the user so as to the address flag direct to the second partition for reference on next booting up. The application program can communicate with the multiple boot manager located on the partition for multiple boot manager, or call the multiple boot manager to be activated.

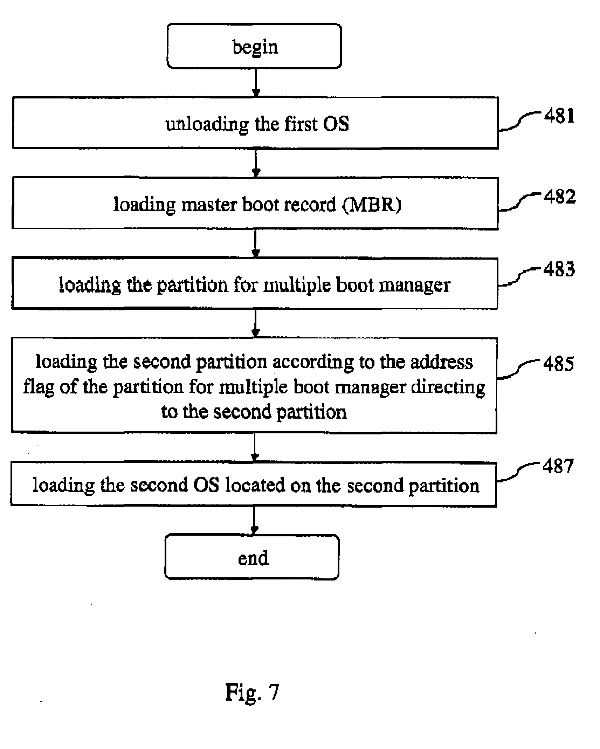

Now referring to Fig.7, Fig.7 shows the flowchart of rebooting procedure according to the present invention. The step of rebooting procedure includes: unloading the first OS (step 4$1) to ensure data conservation to be safe and integrated. The reboot procedure means not to restart up the computer, such as hot or cold start the computer, but the subsequent boot procedure omitting the BIOS program. The conventional boot procedure whether cold or hot boot has to load BIOS program for execution, the reboot procedure according to the present invention need load not BIOS but master boot record (MBR) into memories (step 482), and pass the control of program execution to boot partition loader of MAR Then MHR loads the partition for multiple boot manager into memories (step 483), the control of program execution is passed to the partition for multiple boot manager which includes a multiple boot manager. The multiple boot manager loads the second partition to memories (step 485) according to the address flag directing to the second partition and the partition for multiple boot manager passes the control of program execution to the second partition. The second partition includes a boot sector which has a boot loads for loading the second OS located on the second partition to memories (step 487)_The second partition pass the control of program execution to the second OS located on the second partition ,

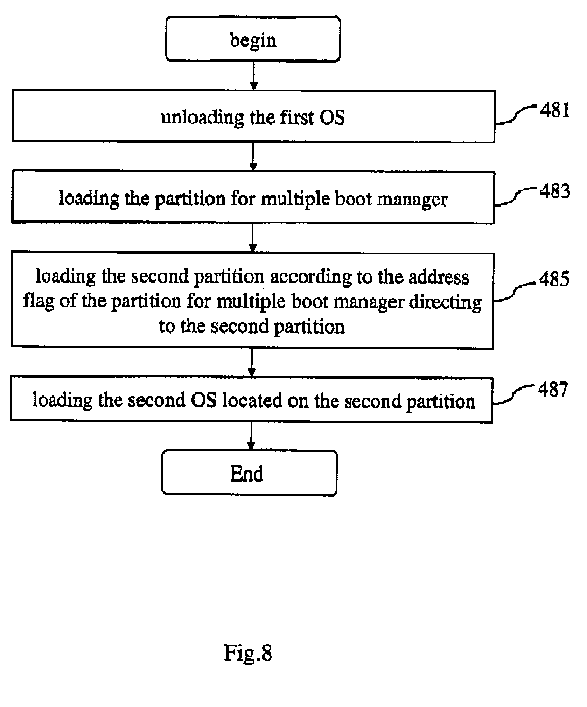

Fig8 shows a flowchart of another embodiment about rebooting procedure according to the present invention. Tha embodiment describes a reboot procedure which omits BIOS program and master boot record (MaR), The reboot steps includes: unloading the first operating system (step 481); loading not BIOS program and master boot record (1VIHR) but the partition for multiple boot manager into memories; passing the control of program execution to the partition for multiple boot manager; subsequently step 485 and step 487 is carried out.

Although the invention has been explained in relation to its preferred embodiment, many other possible modifications and variations can be made without departing from the spirit and scope of the invention as hereinafter claimed.

## Claims

1. A method of multiple boot manager, said method comprising:
defining a partition for multiple boot manager with a multiple boot manager stored therein;
starting up a computer for loading a first operating system;
altering operating system for executing an application program under the condition of the first OS to alter address flag of the partition for multiple boot manager;
rebooting a computer for unloading the first OS, and loading multiple boot manager located in the partition for multiple boot manager, loading a second OS according to the address flag.

2. A method of multiple boot manager, said method comprising:
setting up a storing medium which is defined with a partition for multiple boot manager, a first partition and a second partition, wherein said partition for multiple boot manager includes a multiple boot manager, and address flags directing the first partition or the second partition;
starting up a computer for loading a first operating system;
altering operating system which includes: executing an application program under the condition of the first OS and creating a conversational option interface for choice by the user; altering the address flag of the partition for multiple boot manager to directing the second partition according to the choice or operation of the user; and
rebooting a computer which includes: unloading the first OS; loading the partition for multiple boot manager; directing to the second partition according to the address flag of the partition for multiple boot manager and loading multiple boot manager to the second partition; loading the second OS located on the second partition.

3. The method of multiple boot manager according to claim 2, wherein said starting up a computer further includes: executing BIROS program; BIOS loading master boot record (MBR); said MBR loading the partition for multiple boot manager; loading the 6rat partition according to the address flag of the partition for multiple boot manager, loading the first OS located on the first partition.

4. The method of multiple boot manager according to claim 2 or claim 3, wherein said starting up a computer further includes: passing the control of program execution from BIOS to 1VI13R; passing the control of program execution from MBR to the partition for multiple boot manager,; passing the control of program execution from the partition for multiple boot manager to the first partition; passing the control of program execution from the first partition to the first OS.

5. The method of multiple boot manager according to claim 2, wherein said rebooting a computer, said the second partition further includes a boot loader for loading the second OS to the second partition.

6. The method of multiple boot manager according to claim 2, wherein said altering operating system, said conversational option interface is designed as radio button options which include a plurality of name options of different operating system with the first name option unaccessible.

7. The method of multiple boot manager according to claim 2, wherein said application program aims to altering the address flag of the partition for multiple boot manager to direct to the first or second partition.

8. The method of multiple boot manager according to claim 2, wherein said rebooting a computer further includes: loading master boot record (MBR).

9. The method of multiple boot manager according to claim 2, wherein said storing medium includes a plurality of hard disks with at least one partition defined thereon, said partition for multiple boot manager defined on one of the hard disks.
